Europäisches Patentamt

European Patent Office

Office européen des brevets

(19)

(11) Publication number: **0 053 496**
**B1**

(12) # EUROPEAN PATENT SPECIFICATION

(45) Date of publication of patent specification: **14.08.85**

(51) Int. Cl.⁴: **F 24 J 3/00**

(21) Application number: **81305626.4**

(22) Date of filing: **27.11.81**

(54) Low temperature heat store.

(30) Priority: **28.11.80 GB 8038284**

(43) Date of publication of application:
**09.06.82 Bulletin 82/23**

(45) Publication of the grant of the patent:
**14.08.85 Bulletin 85/33**

(84) Designated Contracting States:
**DE SE**

(56) References cited:
**DE-A-2 746 829**
**DE-A-2 916 839**
**DE-B-2 658 720**
**DE-B-2 744 468**
**US-A-4 127 161**
**US-A-4 152 899**
**US-A-4 233 960**

(73) Proprietor: **Exxon Research and Engineering Company**
**P.O.Box 390 180 Park Avenue**
**Florham Park New Jersey 07932 (US)**

(72) Inventor: **Moss, Gerald, Dr.**
**Trevose Sarajac Avenue**
**East Challow Wantage Oxfordshire (GB)**

(74) Representative: **Field, Roger Norton et al**
**ESSO Engineering (Europe) Ltd. Patents & Licences Apex Tower High Street**
**New Malden Surrey KT3 4DJ (GB)**

Courier Press, Leamington Spa, England.

# Description

This invention relates to a heat store using a substance with a relatively high heat of fusion in conjunction with a solar radiation collector.

The cheapest and most effective solar panel is one which operates below ambient temperature, since its heat collection efficiency is higher than its absorptivity because of the fact that it receives heat from the air instead of losing heat to it. Heat collected at temperatures below ambient temperature may be delivered by a heat pump to a central heating system at a co-efficient of performance (C.O.P.) which will depend on the difference between the collection temperature and the delivery temperature; it is desirable that this temperature difference be minimised so as to achieve higher C.O.P.'s. Therefore it is desirable that heat collected during the day should be collected at temperatures as close as possible to ambient.

Most of the central heating load is likely to occur during the morning and evening when there is little or no sun and the ambient temperature is low. It is therefore advantageous to use the solar collector in conjunction with a heat store which is charged during the day and discharged when the central heating load is at its highest.

According to this invention a suitable low temperature heat store comprises a tank containing a liquid of low freezing point in which is immersed at least one liquid-tight and heat-conducting container, said container or containers housing a plurality of different substances each of freezing point of between −5°C and +18°C and with a latent heat of fusion of above 125 kJ/kg so that when the heat store is being charged with heat or is being discharged of heat the temperature of each substance is substantially the same. There are also a solar radiation collector associated with the tank so that heat obtained from the collector can be transmitted to the liquid in the tank and means for extracting heat from said liquid.

Using this heat store it is possible to store heat at a substantially constant temperature which is advantageous because as stated above higher COP's are achieved. Heat may then be transferred from the heat store to another heat store or to a load by means of a heat pump. Generally the heat storage temperature will be 5 to 10°C below ambient temperature during daylight hours and this will be advantageous as mentioned above, in that it receives heat from the air.

As for the prior art, US—A—4127161 concerns a heat storage unit in the form of cylinder containing a plurality of closed tubes holding a heat storage substance. This specification does not disclose a tank containing a liquid having a freezing point below 0°C and fails to disclose substances having freezing points between −5°C and 18°C or latent heats of fusion above 125 kJ/kg. Also in the system heat transfer fluid is pumped successively from storage units at different temperatures and so the heat storage substances are not at substantially the same temperature at any given time. US—A—4152899 relates to heat storage using an aqueous hydrate-forming salt solution. However, the container in which the aqueous solution is present is not immersed in a liquid in a tank, let alone a liquid having a freezing point of below 0°C, and so no heat is extracted from such a liquid and the container holds a solution of only one type of hydrate-forming salt. US—A—4233960 concerns a heat storage apparatus and method involving the heat of reaction of a suitable salt and not with the latent heat of fusion. One and only one salt solution is ever used and there is no disclosure or suggestion of using a plurality of substances each of freezing point between −5°C and +18°C and with a latent heat of fusion of above 125 kJ/kg.

The tank can be of any shape or size but this should be commensurate with the fact that there is a solar radiation collector associated therewith and that there are means for extracting heat from the liquid contained therein. Usually a rectangular, square or circular tank will be suitable.

This tank contains a liquid of low freezing point, by which term we mean one with a freezing point of below 0°C, preferably between −10°C and 0°C.

This liquid should of course be inert to the tank and any other material with which it comes in contact. A suitable example is a conventional anti-freeze (ethylene glycol) solution; other examples are an aqueous solution of calcium chloride or relatively inert, aqueous solutions of other salts.

Immersed in this liquid is at least one liquid-tight and heat conducting container housing a plurality of different substances each of freezing point of between −5°C and +18°C and with a latent heat of fusion of above 125 kJ/kgm. Preferably their freezing point lies between −5°C and +15°C and preferably their latent heats of fusion are above 150, and more preferably about 200 kJ/kg. Preferably the difference in freezing points between each substance is between 4°C and 8°C, e.g. about 6°C and if there are three different substances this temperature difference of about 6°C between the freezing points can be spread more or less over the whole range of −5°C to +18°C.

Suitable substances include benzene (freezing point 5.5°C, latent heat of fusion 126 kJ/kg), formic acid (freezing point 8.4°C, latent heat of fusion 247 kJ/kg), acrylic acid (freezing point 13°C, latent heat of fusion 155 kJ/kg), paraxylene (freezing point 16°C, latent heat of fusion 164 kJ/kg) and glycerol (freezing point 18°C, latent heat of fusion 199 kJ/kg). Where lower freezing points are required, e.g. below 0°C, mixtures of water and freezing point depressants, e.g. calcium chloride may be used. These will usually have latent heats of fusion of about 300 kJ/kg.

It is preferable that there be a plurality of containers, each containing one substance immersed in the liquid in the tank. However, as an alternative one could use a compartmentalised container each compartment containing a different substance. Of course there is no objection to there being more than one container or more than one compartment containing the same substance.

As another possible alternative it may be possible to use only one container containing a mixture of the above-mentioned substances. This would only be possible in cases where either there was no interaction between the substances or any interaction did not affect the freezing points so that they were outside the range of −5°C to +18°C.

Since the substances housed in the containers expand and contract due to solidification and melting, these containers are preferably made of a flexible material, e.g. and elastomer such as butyl rubber or polyvinyl chloride.

The most convenient solar radiation collector comprises a solar panel which needs no glazing and which may be constructed from a cheap plastics material such as polypropylene. This may be located as a roof over the tank. The liquid in the tank is circulated e.g. by a circulation pump through the receiver of the solar radiation collector which is preferably a conduit. However other forms of solar radiation collectors may be used, for example any conventional glazed radiation collector, and it is not necessary that they be attached directly to the tank. It is necessary however that the heat obtained from the solar collector be transmitted, preferably by heat exchange to the liquid in the tank.

In order to extract heat from the liquid, for example at night time when substantially no heat is being received from the solar radiation collector, it is convenient if the liquid in the tank be circulated, e.g. by a circulation pump, through a heat exchanger wherein heat exchange takes place between the circulated liquid and liquid e.g. water, which supplies heat to the load. It is possible for there to be one circulation pipework and one circulating pump for the liquid from the tank and a two-way valve whereby when heat can be obtained from the solar radiation collector the liquid is circulated through the collector, and when it is desired to deliver heat to the load the valve is set so that the liquid from the tank is circulated, e.g. through a heat exchanger, so as to deliver heat to the load.

It is preferred however to have two separate pipeworks, one in which liquid from the tank is circulated, e.g. by a circulation pump, so as to receive heat from the solar radiation collector and one in which liquid from the tank is circulated, e.g. by a circulation pump, to deliver heat to the load.

It is advantageous to use the low temperature heat store of this invention in conjunction with a high temperature heat store which operates at or above the delivery temperature to the load e.g. a central heating system. The heat is transferred to the high temperature heat store by means of a heat pump which may be for example a vapour-compression heat pump or an adsorption heat pump.

The heat store of this invention is operated as follows. During daylight hours the liquid in the tank is circulated through the receiver of the solar radiation collector and this heats up the container or containers housing the substances of freezing points of between −5°C and +18°C. At least one of these substances will melt whilst heat is being supplied from the solar radiation collector. When the temperature drops, e.g. at night when there is no solar radiation, the liquid in the tank is then circulated through the means for extracting heat, e.g. heat exchanger so as to supply heat to the load. As the temperature drops the substance or substances which have melted during daylight hours will freeze giving up their latent heat, hence maintaining the temperature of the liquid in the tank so that the latent heat of freezing is transferred to the load. Generally speaking the low temperature heat store will operate at below ambient temperature, but on very cold days its temperature might be slightly above ambient temperature.

When used in conjunction with a heat pump delivering heat to high temperature heat store it is convenient to use a vapour-compression heat pump, the compressor of which can be operated by cheap off-peak electricity since it is generally delivering heat at night.

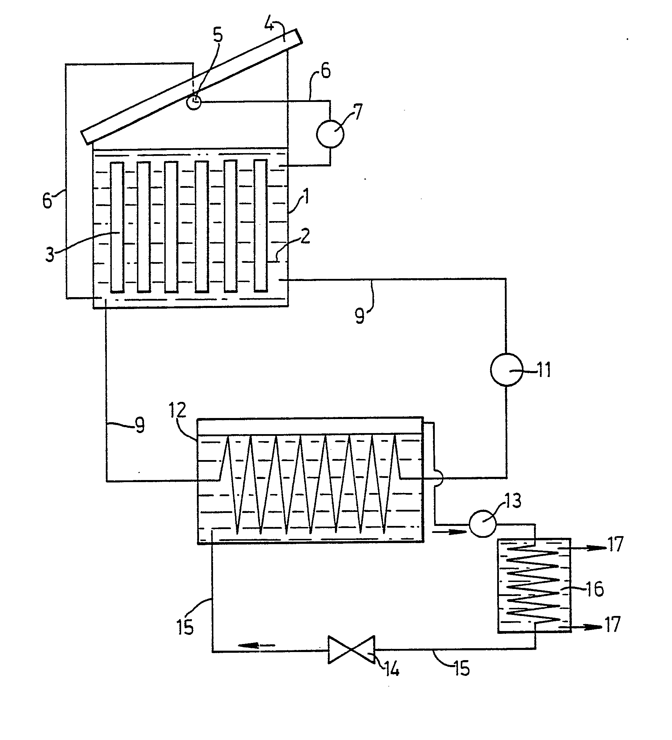

A preferred form of the low temperature heat store of this invention in conjunction with a heat store is described with reference to the drawing.

Referring to the drawing a tank 1 houses the low freezing point liquid 2 which in this case is water containing ethylene glycol. Immersed in this water 2 are six containers made of butyl rubber, one of which is showh at 3. Three of them contain acrylic acid having a freezing point of 13°C and three of them contain benzene having a freezing point of 5.5°C. Roofing the tank 1 is a solar radiation panel 4 having a receiver 5 in the form of a conduit. There is a conduit 6 connected to a circulation pump 7 and to both ends of the receiver conduit 5 and is connected to tank 1 so that liquid 2 can be circulated by means of pump 7 from tank 1, conduit 5 and back to the tank 1.

There is another conduit 9 which is connected to circulation pump 11 and is in circuit with evaporator 12. It is also connected to the tank 1 so that liquid 2 can be circulated by means of pump 11 from tank 1 through evaporator 12 and back to the tank 1.

Also in circuit with evaporator 12 is a heat pump comprising compressor 13 and expansion valve 14 both connected by conduit 15 to a further heat exchanger 16. Heat abstracted from this heat exchanger 16 is delivered to the load 17. The refrigerant used in conduit 15 and hence evaporator 12 is dichlorodifluoromethane.

In operation, during the daytime, pump 7 is operated but pump 11 and compressor 13 are shut off. Solar radiation falling on solar collector 4 causes a rise in temperature of receiver 5 through which the anti-freeze liquid 2 is being circulated. As the temperature rises, the benzene housed in three of the containers 3 will melt and if the temperature of liquid 2 rises above 13°C the acrylic acid housed in the other three containers 3 will melt.

When it is desired to obtain heat from the heat store, e.g. at night time, pump 7 is shut off, pump 11 operated and compressor 13 operated.

As the liquid 2 circulates in conduit 9 it delivers heat to the evaporator 12 which in turn delivers heat to the refrigerant passing through the evaporator 12. The refrigerant is caused to vaporise and this refrigerant vapour is compressed in compressor 13, using off-peak electricity, and then passes to heat exchanger 16 where it delivers heat to the load 17 which in this case incorporates a heat of fusion heat store operating at 60°C and as a result the vaporised refrigerant liquefies. The liquefied refrigerant then passes to the expansion valve 14 where it is cooled and then passes to the evaporator 12. The liquefied refrigerant absorbs heat in the evaporator 12 and vaporises.

As the liquid 2 cools and after circulation through conduit 9 giving up heat to the evaporator, the liquids in one or more of the containers 3 will freeze giving up latent heat to the surrounding liquid 2. This will mean that the temperature of the liquid circulating in conduit 9 will rise and hence more heat can be delivered to the evaporator 12 and eventually to the load 17. This process can continue until all the liquid in the containers 3 has frozen and the liquid 2 has cooled down to ambient temperature.

## Claims

1. A heat store comprising a solar radiation collector (4) capable of supplying heat to a liquid which is capable of contacting at least one liquid-tight container (3) housing a heat storage substance and means (12, 16) for extracting heat from the liquid characterised in that (A) said liquid (2) has a freezing point of below 0°C, (B) said liquid is housed in a tank (1), (C) at least one of said containers (3) is immersed in said liquid (2), said container or containers (3) being heat-conducting and (D) said heat storage substance comprises a plurality of different substances each of freezing point of between −5°C and +18°C and with a latent heat of fusion of above 125 kJ/kg housed within said container or containers, so that when the heat store is being charged with heat or being discharged of heat the temperature of each substance is substantially the same.

2. A heat store according to claim 1 wherein said liquid is an aqueous solution of ethylene glycol.

3. A heat store according to either of claims 1 and 2 wherein the liquid contained in the tank has a freezing point of between −10°C and 0°C.

4. A heat store according to any one of the preceding claims each substance has a freezing point of between −5°C and +15°C.

5. A heat store according to any one of the preceding claims wherein the difference in freezing points between each substance is between 4°C and 8°C.

6. A heat store according to any one of the preceding claims wherein said substances have a latent heat of fusion of above 150 kJ/kg.

7. A heat store according to any one of the preceding claims wherein there are a plurality of containers each containing one substance.

8. A heat store according to any one of the preceding claims wherein the container is made of an elastomer.

9. A heat store according to any one of the preceding claims wherein the solar radiation collector is a solar panel roofing the tank.

10. A heat store according to any one of the preceding claims which includes a heat pump capable of transferring heat to a high temperature heat store, for example a vapour-compression heat pump.

## Patentansprüche

1. Wärmespeicher mit einem Sonnenstrahlenkollektor (4), der in der Lage ist, Wärme einer Flüssigkeit zuzuführen, die zumindest einen flüssigkeitsdichten Behälter (3) kontaktieren kann, der eine Wärmespeichersubstanz und Mittel (12, 16) zum Extrahieren von Wärme aus der Flüssigkeit enthält, dadurch gekennzeichnet, daß (A) die Flüssigkeit (2) einen Gefrierpunkt von unter 0°C hat, (B) daß die Flüssigkeit in einem Tank (1) untergebracht ist, (C) daß zumindest einer der Behälter (3) in die Flüssigkeit (2) getaucht ist, wobei der oder die Behälter (3) wärmeleitend sind und (D) daß die Wärmespeichersubstanz eine Anzahl von unterschiedlichen Substanzen aufweist, von denen jede einen Gefrierpunkt zwischen −5°C und +18°C hat und wobei eine latente Schmelzwärme von mehr als 125 kJ/kg in dem oder den Behältern untergebracht ist, so daß beim Beladen des Wärmespeichers mit Wärme oder beim Abgeben von Wärme die Temperatur jeder Substanz im wesentlichen gleich ist.

2. Wärmespeicher nach Anspruch 1, dadurch gekennzeichnet, daß die Flüssigkeit eine wässrige Lösung von Ethylenglykol ist.

3. Wärmespeicher nach Anspruch 1 oder 2, dadurch gekennzeichnet, daß die in dem Tank enthaltene Flüssigkeit einen Gefrierpunkt zwischen −10°C und 0°C hat.

4. Wärmespeicher nach einem der vorhergehenden Ansprüche, dadurch gekennzeichnet, daß jede Substanz einen Gefrierpunkt zwischen −5°C und +15°C hat.

5. Wärmespeicher nach einem der vorhergehenden Ansprüche, wobei der Unterschied in den Gefrierpunkten jeder Substanz zwischen 4°C und 8°C ist.

6. Wärmespeicher nach einem der vorhergehenden Ansprüche, worin die Substanzen eine latente Schmelzwärme von mehr als 150 kJ/kg haben.

7. Wärmespeicher nach einem der vorhergehenden Ansprüche, gekennzeichnet durch eine Anzahl von Behältern, von denen jeder eine Substanz enthält.

8. Wärmespeicher nach einem der vorhergehenden Ansprüche, dadurch gekennzeichnet, daß der Behälter aus einem Elastomeren gemach ist.

9. Wärmespeicher nach einem der vorhergehenden Ansprüche, dadurch gekennzeichnet, daß der Sonnenstrahlenkollektor eine Solarplatte ist, welche den Tank abdeckt.

10. Wärmespeicher nach einem der vorhergehenden Ansprüche, gekennzeichnet durch eine Wärmepumpe, die Wärme zu einem Hochtemperatur-Wärmespeicher übertragen kann, beispielsweise eine Dampf-Kompressionswärmepumpe.

**Revendications**

1. Appareil de stockage de chaleur comprenant un capteur de rayonnement solaire (4) capable de fournir de la chaleur à un liquide susceptible d'entrer en contact avec au moins un récipient (3) étanche aux liquides contenant une substance de stockage de chaleur, et des moyens (12, 16) pour extraire de la chaleur de ce liquide, caractérisé en ce que:

(A) ledit liquide (2) a un point de congélation inférieur à 0°C,

(B) ledit liquide est logé dans un réservoir (1),

(C) au moins l'un desdits récipients (3) est immergé dans ledit liquide (2), ledit ou lesdits récipients (3) étant conducteurs de la chaleur, et

(D) ladite substance de stockage de chaleur est constituée par plusieurs substances différentes ayant toutes un point de congélation compris entre −5 et +18°C et une chaleur latente de fusion dépassant 125 kJ/kg, logées dans ledit ou lesdits récipients, de sorte que, lorsque l'appareil de stockage de chaleur est en train de se charger de chaleur ou de délivrer celle-ci, les températures de toutes les substances sont sensiblement les mêmes.

2. Appareil de stockage de chaleur selon la revendication 1, caractérisé en ce que ledit liquide est une solution aqueuse d'éthylène glycol.

3. Appareil de stockage de chaleur selon l'une ou l'autre des revendications 1 et 2, caractérisé en ce que le liquide contenu dans le réservoir a un point de congélation compris entre −10 et 0°C.

4. Appareil de stockage de chaleur selon l'une quelconque des revendications précédentes, caractérisé en ce que lesdites substances ont un point de congélation de −5 et +15°C.

5. Appareil de stockage de chaleur selon l'une quelconque des revendications précédentes, caractérisé en ce que la différence entre les points de congélation desdites substances est de 4 à 8°.

6. Appareil de stockage de chaleur selon l'une quelconque des revendications précédentes, caractérisé en ce que lesdites substances ont une chaleur latente de fusion dépassant 150 kJ/kg.

7. Appareil de stockage de chaleur selon l'une quelconque des revendications précédentes, caractérisé en ce qu'il y a plusieurs récipients contenant chacun une substance.

8. Appareil de stockage de chaleur selon l'une quelconque des revendications précédentes, caractérisé en ce que le récipient est en un élastomère.

9. Appareil de stockage de chaleur selon l'une quelconque des revendications précédentes, caractérisé en ce que le capteur de rayonnement solaire est un panneau solaire de couverture du réservoir.

10. Appareil de stockage de chaleur selon l'une quelconque des revendications précédentes, caractérisé en ce qu'il comporte une pompe à chaleur capable de transmettre de la chaleur à un appareil de stockage de chaleur à haute température, par exemple une pompe à chaleur à compression de vapeur.

0 053 496